# EUROPÄISCHE PATENTSCHRIFT

(11) **EP 4 282 051 B1**
(45) Veröffentlichungstag und Bekanntmachung des Hinweises auf die Patenterteilung: **17.04.2024**
(21) Anmeldenummer: 22709979.3
(22) Anmeldetag: 14.02.2022
(51) Int. Cl.: H02J 15/00, F03G 3/00, H02J 3/28

(54) **KOMBINIERTE SPEICHERUNG VON ELEKTRISCHER ENERGIE IN POTENTIELLER UND CHEMISCHER ENERGIE ZUR ERLANGUNG EINER SCHWARZSTARTFÄHIGKEIT UND ZUR NETZSTABILISIERUNG**
COMBINED STORAGE OF ELECTRIC ENERGY IN POTENTIAL AND CHEMICAL ENERGY FOR ACHIEVING A BLACK-STARTING CAPABILITY AND STABILIZING NETWORKS
STOCKAGE COMBINÉ D'ÉNERGIE ÉLECTRIQUE EN ÉNERGIE POTENTIELLE ET CHIMIQUE AFIN D'OBTENIR UNE CAPACITÉ DE DÉMARRAGE AUTONOME ET EN VUE D'UNE STABILISATION DE RÉSEAU

(30) Priorität: 26.02.2021 DE 102021104744
(43) Veröffentlichungstag der Anmeldung: 29.11.2023
(73) Patentinhaber: RWE Generation SE, 45141 Essen (DE)
(72) Erfinder: MARSCHEWSKI, Julian, 45141 Essen (DE)
(74) Vertreter: Schwenderling, Jens
(86) Internationale Anmeldenummer: PCT/EP2022/053526
(87) Internationale Veröffentlichungsnummer: WO 2022/179878

(56) Entgegenhaltungen:
- DE-A1-102019 212 059
- US-A1- 2012 019 008

## Beschreibung

Die vorliegende Erfindung betrifft ein Verfahren zum Speichern und Abgaben von Energie in Energiespeichern, welche beispielsweise zur Netzstabilisierung von elektrischen Energienetzen eingesetzt werden können, sowie eine entsprechende Speichereinrichtung. Gleichzeitig wird eine Schwarzstartfähigkeit eines entsprechenden Speichersystems gewährleistet.

Aufgrund der immer höheren Verfügbarkeit von erneuerbaren Energien ist es vorteilhaft, in elektrischen Energienetzen in Zeiten eines erhöhten Stromangebotes elektrische Energie aus dem Energienetz zu speichern und diese in Zeiten eines reduzierten Stromangebotes wieder in das Energienetz abzugeben, um die Frequenz des Energienetzes zu stabilisieren. Hierzu sind entsprechende Speichersysteme notwendig, wie z.B. Akkumulatoren, Lithium-Ion basierte Energiespeicher oder Redox-Flow Batterien. Einige Speichersysteme wie beispielsweise Redox-Flow-Batterien weisen zwar eine hohe Energiedichte auf, benötigen zum Starten Fremdenergie, da sie auf der Umsetzung von Elektrolyten in Zellen beruhen, die in die Zellen gefördert werden müssen. Dies erschwert den Einsatz von solchen Systemen zum Wiederaufbau eines Stromnetzes oder Energienetzes nach einem Blackout. Ansätze, diese Probleme für Redox-Flow-Batteriesysteme zu überwinden, sind bekannt, beispielsweise aus der US 2018/0166725 A1 und der US 2014/0220463 A1.

Nachteile von als bekannt angenommenen Batteriesysteme liegen darin, dass diese entweder externe Hilfsenergie, z.B. aus dem Energienetz oder einer weiteren Back-up Batterie benötigen, um den erforderlichen Eigenbedarf dem Batteriesystem zuzuführen, oder die Betriebssysteme des Batteriesystems müssen ständig in einem Standby-Zustand auf Teillast betrieben werden. Im letzteren Fall führt dies dazu, dass der dauerhafte Betrieb von Komponenten des Batteriesystems in Teillast sich negativ auf die Energieeffizienz eines solchen Speichersystems auswirkt und die mechanischen Komponenten zudem zumeist nicht auf schnelle Zustandsänderungen, wie sie beispielsweise zur Netzstabilisierung notwendig sind, sondern auf einen Dauerbetrieb ausgelegt sind, was die Reaktionsfähigkeit und Energieeffizienz eines Batteriesystems bzw. Energiespeichersystems beeinträchtigt.

Aus der DE 10 2019 212 059 A1 ist ein System zur Speicherung und Abgabe von Energie bekannt, welches einen Lageenergiespeicher und einen chemischen Energiespeicher umfasst.

Es ist somit Aufgabe der vorliegenden Erfindung, die aus dem Stand der Technik bekannten Probleme zumindest teilweise zu lösen und insbesondere ein Verfahren und eine Vorrichtung zum Speichern und Abgabe von Energie anzugeben, die es ermöglichen, den erforderlichen Energiebedarf zum Schwarzstart eines chemischen Speichersystems bereitzustellen, ohne dass auf externe Hilfsenergie oder zusätzliche Energieerzeugungseinheiten zurückgegriffen werden muss.

Diese Aufgabe wird gelöst mit den Merkmalen der unabhängigen Ansprüche. Die jeweiligen abhängigen Ansprüche sind auf vorteilhafte Weiterbildungen gerichtet. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Es wird ein erfindungsgemäßes Verfahren zum Speichern und Abgeben von Energie mit den Merkmalen von Anspruch 1 vorgeschlagen. Vorzugsweise wird dabei der zweite Teil der elektrischen Energie in einer Redox-Flow-Batterie als elektrischem Speicher des Speichersystems chemisch gespeichert.

Als chemische Speicher werden Speicher bezeichnet, in denen Energie chemisch reversibel speicherbar ist, und die insbesondere dazu ausgelegt sind, Energie durch Ausbildung chemischer Bindungen in Energieträgern zu speichern und durch ablaufende elektrochemische Reaktionen wieder freizusetzen. Als chemischer Speicher werden bevorzugt galvanische Zellen in der Ausführung als Primär-, Sekundär- oder Brennstoffzelle, Redox-Flow Batterien, Wasserstoffbatterien oder-zellen, Brennstoffzellen in Kombination mit Elektrolyseuren, usw. eingesetzt.

Unter dem Begriff Redox-Flow-Batterie (RFB, (Redox-)Flussbatterie) wird ein chemischer Speicher verstanden, bei dem bei der Speicherung Reaktionspartner reagieren, die in einem Lösungsmittel in gelöster Form vorliegen. Die Reaktionspartner sind bevorzugt zwei energiespeichernden Elektrolyte, die in zwei getrennten Lösungsmittel-Kreisläufen zirkulieren. Die Redox-Flow-Batterie umfasst zumindest eine galvanische Zelle, in der die chemischen Reaktionen beim Speichern und Abgeben von Energie ablaufen. Die Elektrolyte werden außerhalb der Zelle in getrennten Tanks mit dem entsprechenden Lösungsmittel gelagert. Damit ist die Redox-Flow-Batterie mit den Tanks für die Elektrolyte ein chemischer Speicher, bei dem die speicherbare Energiemenge und Leistung unabhängig voneinander skaliert werden können. Zwischen den zwei getrennten Kreisläufen in der galvanischen Zelle erfolgt der Ionenaustausch mittels einer Membran, an der der Elektrolyt in dem entsprechenden Lösungsmittel vorbeifließt. Die galvanische Zelle ist durch die Membran in zwei Halbzellen geteilt, die durch eine Elektrode abgegrenzt ist. Die Membran ist je nach Zelltyp ein mikroporöser Separator, der alle Ionen passieren lässt, oder eine selektive Anionen- oder Kationentauschmembran, oder eine Größenausschlussmembran, die Polymer zurückhält und kleine Ionen passieren lässt. Die Membran soll die Vermischung der beiden Elektrolyte verhindern. Damit die Elektrolyte durch die galvanische Zelle bzw. in den getrennten Kreisläufen fließen können, benötigen Redox-Flow Batterien beispielsweise eine oder mehrere Pumpen, die die Reaktionspartner in dem Lösungsmittel durch die Kreisläufe fördern. Der Betrieb dieser Pumpen benötigt Energie. Somit sind Redox-Flow-Batterien aus sich heraus nicht Schwarzstartfähig, zum Schwarzstart benötigen sie externe Energie aus einem elektrischen Energienetz oder einer Back-up Batterie. Bevorzugt werden folgende Elektrolyte in der Redox-Flow-Batterie eingesetzt: anorganische Ionen basierend auf Vanadium (V), Eisen (Fe), Chrom (Cr), Zink (Zn), Brom (Br₂), Iod (I₂), und/oder Schwefel (S), insbesondere in Schwefelsäure (H₂SO₄) und/oder Salzsäure (HCl), jeweils bevorzugt in wässriger Lösung, gelöst, und/oder organische Moleküle wie beispielsweise Koordinationsverbindungen und organometallische Komplexe, Chinone, Radikale und/oder Polymere, insbesondere gelöst in Butyrolacton (GBL), Acetonitril (ACN), Dimethylacetamid (DMA), und/oder Propylencarbonat (PC), Schwefelsäure (H₂SO₄), Salzsäure (HCl), Kaliumhydroxid (KOH), Natriumhydroxid (NaOH) und/oder Natriumchlorid (NaCL), insbesondere jeweils in wässriger Lösung.

Unter einem mechanischen Speicher wird ein Energiespeicher verstanden, in dem Energie mechanisch gespeichert wird, beispielsweise durch eine Erhöhung der potentiellen Energie des mechanischen Speichers. Dies erfolgt beispielsweise durch eine Anhebung eines Elements relativ zu einem Gravitationsfeld, sodass sich die Lageenergie des Elements erhöht, oder durch die Spannung einer Feder im Hooke'schen Bereich, wodurch sich die in der Feder gespeicherte potentielle Energie erhöht. Mechanische Speicher erlauben eine zeitlich verzögerte Abgabe der gespeicherten Energie. Weitere Beispiele eines mechanischen Speichers sind Schwungradmassenspeicher, Druckluftspeicher oder Flüssiggasspeicher.

Unter einem Schwarzstart wird das Anfahren eines Speichers verstanden, wenn dies unabhängig vom Stromnetz geschieht. Unter Schwarzstartfähigkeit wird die Fähigkeit des Speichers verstanden, unabhängig vom Stromnetz vom abgeschalteten Zustand ausgehend hochzufahren.

Die potentielle Energie oder Lageenergie beschreibt die Energie eines Körpers in einem physikalischen System, die durch seine Lage in einem Kraftfeld wie einem Gravitationsfeld, üblicherweise dem der Erde, oder durch seine aktuelle mechanische Konfiguration bestimmt wird. In einem abgeschlossenen System kann die potentielle Energie bei Verschiebung des Körpers, z.B. durch eine Höhenänderung zu- oder abnehmen. Das Prinzip der mechanischen Energiespeicherung beruht auf der klassischen Newtonschen Mechanik.

Zur Abgabe der gespeicherten Energie wird die eingespeicherte Energie bei Bedarf bevorzugt meistens in elektrische Energie umgewandelt. Idealerweise ist die Energieumwandlung bzw. Energiespeicherung reversibel. Unter einer reversiblen Energiespeicherung versteht man in diesem Zusammenhang, eine flexible umkehrbare Umwandlung von Energieformen ineinander. Reversibel bedeutet also insbesondere, dass Energie in einem Speicher gespeichert und aus diesem wieder entnommen werden kann.

Bevorzugt sind die eingesetzten Speichersysteme schnell reaktionsfähig und bieten die Möglichkeit, die potentielle Energie in genügender Menge im mechanischen Speicher vorzuhalten, um eine Schwarzstartfähigkeit des Speichersystems zu gewährleisten. Diese wird dann beim Schwarzstart zum Starten der Energieentnahme aus oder Energiezufuhr zu dem chemischen Speicher genutzt. Unter Schwarzstart versteht man in diesem Zusammenhang das Aufstarten eines Speichersystems und das Anfahren der dazu notwendigen elektronischen und/oder mechanischen Komponenten, wie z.B. Pumpen oder Steuerungseinheiten, so dass das Speichersystem in einen Betriebszustand versetzt wird, in dem es elektrische Energie abgeben oder aufnehmen kann.

Alternativ oder zusätzlich ist es auch möglich, die potentielle Energie direkt in elektrische Energie umzuwandeln und diese beispielsweise in ein elektrisches Energienetz zur Netzstabilisierung abzugeben. Damit können diese Speichersysteme für die schnelle Netzstabilisierung eines elektrischen Energienetzes, z.B. in der Frequenzhaltung, zum Einsatz kommen. Weiterhin ist das Speichersystem schwarzstartfähig, kann also ohne Zuführung von Energie von außen einen Schwarzstart durchführen, so dass ein entsprechendes Speichersystem beispielsweise auch zum Starten eines anderen Verbrauchers, beispielsweise einer Kraftwerksanlage im Falle eines Stromausfalls dienen kann. Alternativ ist es auch möglich, Energie aus einem Energienetz zum Schwarzstart des Speichersystems, insbesondere zum Aufnehmen oder Speichern von Energie, im Speichersystem einzusetzen.

Erfindungsgemäß ist es vorgesehen, dass bei diesem Verfahren die Speicherung und Abgabe von potentieller Energie zumindest zeitweise durch eine Veränderung einer Position des chemischen Speichers relativ zu einem Gravitationsfeld, insbesondere dem Gravitationsfeld der Erde, erfolgt.

Unter einem Gravitationsfeld wird insbesondere das Schwerkraftfeld der Erde verstanden, falls das Speichersystem auf der Erde eingesetzt wird. Unter der Veränderung einer Position des chemischen Speichers relativ zu einem Gravitationsfeld wird insbesondere verstanden, dass der chemische Speicher relativ zum dominanten Gravitationsfeld, insbesondere der Erde, zum Speichern von Energie angehoben und zum Abgeben von Energie abgesenkt wird. In diesem Zusammenhang versteht man insbesondere die dritte Koordinate, bezeichnet als Höhe, als Position des chemischen Speichers. Das bedeutet, dass bevorzugt die Lage des chemischen Speichers entlang der dritten Koordinate veränderbar ist.

Somit lässt sich zur schnellen Netzstabilisierung in der Anfangsphase der Leistungsanforderung die notwendige elektrische Energie durch die Veränderung der Lageenergie des chemischen Speichersystems erzeugen, beispielsweise indem durch die Lageänderung ein Generator zur Erzeugung von elektrischer Energie angetrieben wird. Erst bei längerdauernden Leistungsanforderungen wird auf die im chemischen Speicher gespeicherte Energie zurückgegriffen und diese in elektrische Energie umgewandelt.

Somit ist es möglich, den chemischen Speicher in Zeiten, in denen elektrische Energie gespeichert wird, in eine bestimmte Position anzuheben, bis eine erforderliche potentielle Energie reversibel gespeichert ist, die die Abgabe einer vorgebbaren Menge Energie ermöglicht.

Gemäß einer vorteilhaften Ausgestaltung sieht das Verfahren vor, dass das chemische Speichersystem in einem ersten Betriebszustand, in dem es elektrische Energie abgibt oder aufnimmt und in einem zweiten Betriebszustand, in dem es keine elektrische Energie abgibt oder aufnimmt, betreibbar ist, wobei zum Übergang aus dem zweiten Betriebszustand in den ersten Betriebszustand eine Startenergie zum Aktivieren des chemischen Speichers aufgebracht wird.

Unter dem zweiten Betriebszustand wird insbesondere auch der Betriebszustand verstanden, in dem keine Speicherung oder Aufnahme von Energie im chemischen Speicher erfolgt, das Speichersystem also ruht. Insbesondere für eine schnelle Netzstabilisierung und zur Schwarzstartermöglichung ist es vorteilhaft möglich, die potentielle Energie und insbesondere die Position des chemischen Speichers über die Zeit innerhalb eine gewisse Höhenbereich so zu verändern, dass eine ausreichende potentielle Energie als Startenergie für den Schwarzstart des chemischen Speichers zur Verfügung steht. Dies kann durch eine einmalige Bewegung geschehen oder durch eine sequenzielle Bewegung des chemischen Speichers, beispielsweise durch eine entsprechende Hebevorrichtung, bis die potentielle Energie ausreicht, die erforderliche Startenergie aufzubringen. Somit ist es möglich, eigentlich nicht Schwarzstartfähige Systeme wie beispielsweise eine Redox-Flow-Batterie Schwarzstartfähig einsetzen zu können. Gleichzeitig wird vorteilhaft die Masse des chemischen Speichers als Teil des mechanischen Speichers eingesetzt, in dem der chemische Speicher selbst angehoben oder abgesenkt wird.

Somit ist es nicht notwendig, den chemischen Speicher dauerhaft in Teillast betreiben zu müssen, um auf Leistungsanforderungen flexibel reagieren zu können. Durch Vermeiden des dauerhaften Betriebs von mechanischen Komponenten in Teillast wird die Energieeffizienz eines solchen Speichersystems erhöht. Des Weiteren ist es dadurch vorteilhaft möglich, die mechanischen Komponenten wie beispielsweise Pumpen, insbesondere Kreiselpumpen und/oder Membranpumpen, Ventile oder ähnliches des Speichersystems nicht auf schnelle Zustandsänderungen auszulegen und so die Nutzbarkeit z.B. in der Netzstabilisierung weiter zu erhöhen.

Gemäß einer weiteren vorteilhaften Ausgestaltung des Verfahrens erfolgt die Veränderung der Position des chemischen Speichers relativ zu einem Gravitationsfeld durch eine Hebevorrichtung. Durch die Hebevorrichtung kann also der chemische Speicher zur Speicherung von Energie relativ zu einer Nullposition angehoben oder zur Abgabe von Energie abgesenkt werden. Durch die Umwandlung von potentieller Energie in elektrische Energie ist das chemischen Speichersystem vorteilhaft in der Lage, mit dieser im mechanischen Speicher gespeicherten Energie im Fall eines Schwarzstartes den chemischen Speicher aufzustarten und zum anderen direkt die im mechanischen Speicher gespeicherte Energie als elektrische Energie abzugeben und dadurch aufgrund der Schnelligkeit der Abgabe zur Netzstabilisierung eines elektrischen Energienetzes beitragen zu können.

Vorteilhaft ist die Hebevorrichtung so ausgebildet, dass der chemische Speicher auf verschiedenen, insbesondere vorgebbaren, Höhen positioniert werden kann. Bevorzugt ist die Hebevorrichtung als eine Art Hebebühne ausgebildet, auf der der chemische Speicher angebracht ist. Durch die Hebevorrichtung ist es einfach möglich, die potentielle Energie durch eine Veränderung der Position des chemischen Speichers zu verändern und durch Vorhalten der erforderlichen Startenergie das Aufstarten des chemischen Speichers zu ermöglichen. Bevorzugt wird der chemische Speicher auf einer Höhe gehalten, die es ermöglicht, einen Schwarzstart des chemischen Speichers zu ermöglichen. Wird mehr potentielle Energie im mechanischen Speicher gespeichert, dann kann diese durch eine direkte Umwandlung in elektrische Energie, beispielsweise durch Antrieb eines elektrischen Generators, direkt in das elektrische Energienetz abgegeben werden, beispielsweise zur Netzstabilisierung, und trotzdem die Schwarzstartfähigkeit erhalten bleiben.

Bevorzugt wird die potentielle Energie, insbesondere über zumindest einen Generator und/oder zumindest einen Elektromotor, in elektrische Energie umgewandelt, welche zum Antreiben der mechanischen und/oder elektronischen Komponenten des chemischen Speichersystems verwendet werden kann. Die erzeugte elektrische Energie kann gleichzeitig auch zum Hochfahren weiterer parallel-laufender Verbraucher mit Energieanforderung verwendet werden. Hierbei wird ein Elektromotor extern mechanisch angetrieben und erzeugt dadurch elektrische Spannung, die zum Betreiben von anderen Aggregaten benutzt werden kann.

Gemäß einem weiteren Aspekt der vorliegenden Erfindung wird ein Speichersystem zum Speichern und Abgeben von Energie mit den Merkmalen von Anspruch 5 vorgeschlagen. Vorzugsweise ist der chemische Speicher eine Redox-Flow-Batterie.

Vorteilhaft ist das Speichersystem zur Durchführung des erfindungsgemäßen Verfahrens geeignet und bestimmt.

Das Speichersystem ist erfindungsgemäß durch den mechanischen Speicher zur Speicherung und Abgabe von potentieller Energie derart ausgebildet, dass zumindest zeitweise die Position des chemischen Speichers relativ zu einem Gravitationsfeld veränderbar ist.

In einer vorteilhafter Ausführungsform ist das Speichersystem in einem ersten Betriebszustand betreibbar, in dem es elektrische Energie abgibt oder aufnimmt und in einem zweiten Betriebszustand, in dem es keine elektrische Energie abgibt oder aufnimmt, wobei zum Übergang aus dem zweiten Betriebszustand in den ersten Betriebszustand eine Startenergie zum Aktivieren des chemischen Speichersystems nötig ist, die durch die Umwandlung von potentieller Energie aus dem mechanischen Speicher in elektrische Energie aufbringbar ist.

In einer weiteren Ausführungsform umfasst das Speichersystem weiterhin mindestens eines der folgenden Elemente: einen Generator und einen Elektromotor zur Umwandlung von potentieller Energie in elektrische Energie. So ist es beispielsweise möglich, eine Hebevorrichtung grundsätzlich bei der Speicherung von Energie im mechanischen Speicher über einen Elektromotor zu verstellen, insbesondere anzuheben und dann im Falle der Abgabe durch die Hebevorrichtung den Elektromotor anzutreiben, der wiederum elektrische Spannung liefert. Bevorzugt ist grundsätzlich zur Umwandlung von potentieller Energie in elektrische Energie der mechanische Speicher mit dem Generator und/oder dem Elektromotor verbunden.

Vorteilhaft weist der mechanische Speicher des Speichersystems eine Hebevorrichtung, insbesondere eine hydraulische Hebevorrichtung, zur Änderung der Lage, insbesondere der Höhe, des chemischen Speichers auf. Vorteilhaft ist die Hebevorrichtung so ausgebildet, dass der chemische Speicher auf verschiedenen Höhen positionierbar ist. Bevorzugt ist die Hebevorrichtung als eine Art Hebebühne ausgebildet, auf der der chemische Speicher angebracht ist.

Durch die Ausbildung der Hebevorrichtung ist es einfach möglich, in Abhängigkeit von der der Menge an erforderlicher Startenergie die potentielle Energie durch eine Veränderung der Position des chemischen Speichers zu verändern und den Schwarzstart des chemischen Speichers zu ermöglichen. Dadurch, dass im Regelbetrieb stets eine Menge an potentieller Energie gespeichert wird, die größer als die Startenergie ist, ist jederzeit ein Schwarzstart des Speichersystems möglich. Wird mehr potentielle Energie als die Startenergie im mechanischen Speicher gespeichert, dann kann diese durch eine direkte Umwandlung in elektrische Energie, beispielsweise durch Antrieb eines elektrischen Generators, direkt in das elektrische Energienetz abgegeben werden, beispielsweise zur Netzstabilisierung.

Alternativ oder zusätzlich umfasst der mechanische Speicher mindestens eines der folgenden Elemente: einen Seilzug, eine Feder, einen pneumatischen Zylinder in Kombination mit einem Druckmediumreservoir, einen hydraulischen Zylinder in Kombination mit einem Reservoir. Alternativ ist es auch bevorzugt, nur Teile des chemischen Speichers durch die Hebevorrichtung anheben und absenken zu lassen, beispielsweise nur die Elektrolyttanks im Falle einer Redox-Flow-Batterie als chemischen Speicher.

Das chemische Speichersystem ist also beispielsweise an ein Seilzug aufgehängt, welcher mit einem Generator und/oder einem Elektromotor so verbunden ist, dass beim Herablassen des chemischen Speichers von einer bestimmten Höhe der Generator und/oder Elektromotor durch das Zugseil aktiviert (gedreht) und die potentielle Energie in elektrische Energie umgewandelt wird.

In einer weiteren Ausführungsform ist die Hebevorrichtung eine hydraulische Hebevorrichtung. Die Anhebung durch eine hydraulische Hebevorrichtung erfolgt durch Aktivierung eine hydraulische Pumpe. Insbesondere bei einem chemischen Speicher, der als Redox-Flow-Batterie ausgebildet ist, wird beim Herablassen des chemischen Speichersystems die potentielle Energie durch einen Generator und/oder Elektromotor in elektrische Energie umgewandelt und durch diese eine oder mehrere Pumpen angetrieben, die die Redox-Flow-Batterie mit Elektrolyten versorgen, so dass das Speichersystem Schwarzstartfähig ist.

Vorteilhaft kann die Verbindung zwischen Hebevorrichtung und dem Generator und/oder Elektromotor durch andere mechanische Komponenten/Lösungen hergestellt werden, wie z.B. eine Feder, ein Hydrauliksystem mit hydraulischem Zylinder und einem entsprechenden Reservoir für ein Hydraulikmedium und/oder einem Pneumatik-System mit einem pneumatischen Zylinder und einem entsprechenden Reservoir für ein Pneumatikmedium, insbesondere Luft.

Vorteilhaft umfasst der chemische Speicher mindestens eines der folgenden Elemente: eine Redox-Flow Batterie, eine Lithium-Ionen Batterie, eine Natrium-Schwefel Batterie und eine Brennstoffzelle zur Wasserstoff-Rückverstromung. Brennstoffzellen mit Wasserstoff Rückverstromung sind eine Art Energiespeicher, die die Elektrizität in Form von Wasserstoff zwischenspeichern und diesen zu einem späteren Zeitpunkt wieder durch die Brennstoffzelle rückverstromen, also durch die Brennstoffzelle elektrische Energie erzeugen.

Zur Durchführung des erfindungsgemäßen Verfahrens umfasst das Speichersystem weiterhin eine Regelungseinheit, die insbesondere die Stoffströme und dabei insbesondere Pumpen zur Förderung von Reaktanden/Elektrolyten, Temperaturen, und/oder die Speicherung oder Abgabe von potentieller Energie im oder aus dem mechanischen Speicher, insbesondere durch ein Anheben oder Absenken des chemischen Speichers, regelt.

Das erfindungsgemäße Verfahren und die erfindungsgemäße Vorrichtung werden bevorzugt zur Stabilisierung der Netzfrequenz eines Energienetzes verwendet werden.

In vorteilhafter Weise ist die Vorrichtung in direkter Kombination mit einer Windkraftanlage ausgebildet, beispielsweise direkt im Fuß (z.B. innerhalb der unteren 10 Meter) innerhalb des Turms der Windkraftanlage integriert. So wird die vorhandene Grundfläche sowie ein Teil des Turms der Windkraftanlage genutzt, um die Vorrichtung vor Umwelteinflüssen zu schützen. Damit wird die Stabilität des Turms vorteilhaft nicht beeinflusst, da die Vorrichtung nur auf einem Bruchteil der Gesamthöhe des Turms installiert werden kann. Auch eine höhere Positionierung ist denkbar, die dann beispielsweise bei einer Sturmwarnung abgesenkt werden kann, um den Schwerpunkt der Windkraftanlage in Richtung Erdboden zu verlagern. So kann die Vorrichtung direkt zum Speichern von elektrischer Energie eingesetzt werden, die lokal in der Windkraftanlage erzeugt wird. Die Windkraftanlage ist, unabhängig von der erfindungsgemäßen Vorrichtung, mit dem elektrischen Energienetz verbunden, so dass eine einfache Anbindung der Vorrichtung an das elektrische Energienetz unter Ausnutzung der bestehenden Anbindung der Windkraftanlage möglich ist. Alternativ kann eine Ausbildung beispielsweise auch in ausgedienten Minenschächten oder in Türmen erfolgen. Alternativ ist auch eine Ausgestaltung, bei der der mechanische Speicher einen Wagen, beispielsweise eine Lore, umfasst, der von einem Elektromotor/Generator, beispielsweise über einen Seilzug, eine schiefe Ebene zum Speichern von Energie hinaufgezogen und zum Abgeben von Energie abgelassen wird.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen:
- Fig. 1: ein erstes Beispiel eines Speichersystems;
- Fig. 2: ein zweites Beispiel eines Speichersystems;
- Fig. 3: ein erstes Beispiel einer Verfahrensführung mit unterschiedlichen Positionen eines chemischen Speichers;
- Fig. 4: die gespeicherte potentielle Energie im ersten Beispiel der Verfahrensführung;
- Fig. 5: ein zweites Beispiel einer Verfahrensführung mit unterschiedlichen Positionen eines chemischen Speichers;
- Fig. 6: die gespeicherte potentielle Energie im zweiten Beispiel der Verfahrensführung; und
- Fig. 7: einen Entscheidungsbaum eines Beispiels einer Verfahrensführung zur Speicherung von elektrischer Energie im Speichersystem.

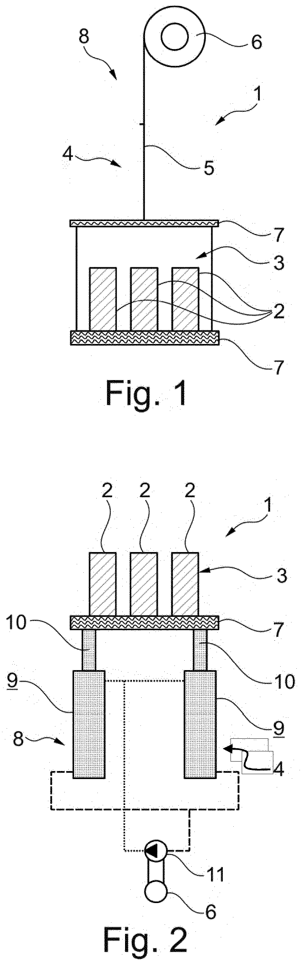

Fig. 1 zeigt schematisch ein Speichersystem 1 zum Speichern und Abgeben von Energie, in dem elektrische Energie reversibel speicherbar ist. Das Speichersystem 1 umfasst einen chemischen Speicher 3, der im vorliegenden Ausführungsbeispiel aus drei Redox-Flow-Batterien 2 aufgebaut ist mit jeweils einer oder mehreren galvanischen Zellen und entsprechenden Aggregaten wie Pumpen, die der Förderung von Reaktionspartnern in eine galvanische Zelle der jeweiligen Redox-Flow-Batterie 3 dienen, sowie entsprechende Speicher für die Reaktionspartner, Elektrolyten und Lösungsmittel, aufgebaut ist.

Das Speichersystem 1 umfasst weiterhin einen mechanischen Speicher 4. Der mechanische Speicher 4 umfasst im ersten Beispiel einen Seilzug 5, einen Elektromotor/Generator 6 und eine Halterung 7, auf der die Redox-Flow Batterien 3 befestigt sind. Der Seilzug 5 ist einerseits an der Halterung 6 befestigt und andererseits am Elektromotor/Generator 6. Der Elektromotor/Generator 6 kann als Elektromotor betrieben werden, der den Seilzug 5 aufwickelt und als Generator, der vom ablaufenden Seilzug 5 angetrieben wird. Durch das Aufwickeln und Ablaufen des Seilzugs 5 wird die potentielle Energie des mechanischen Speichers 4 verändert, da die Halterung 7 und mit ihr das chemische System 3 relativ zum und im Gravitationsfeld der Erde angehoben und abgesenkt wird. So kann im Speicherfall elektrische Energie im mechanischen Speicher 4 gespeichert werden, in dem durch die Betätigung des Elektromotors/Generators 6 als Elektromotor der Seilzug aufgewickelt und dadurch die Halterung 7 angehoben wird. Soll nun mechanische Energie aus dem mechanischen Speicher 4 abgegeben werden, wird der Seilzug 5 mit der Halterung 7 zum Antreiben des als Generator arbeitenden Elektromotors/Generators 6 eingesetzt, so dass der Elektromotor/Generator 6 elektrische Energie abgibt.

Gleichzeitig kann Energie chemisch im chemischen Speicher 3 gespeichert werden. Ist nun das Speichersystem 1 mit einem elektrischen Energienetz verbunden, kann so das Speichersystem 1 zum reversiblen Speichern von Energie genutzt werden. Die im Speichersystem 1 gespeicherte Energie kann beispielsweise zur Netzstabilisierung des elektrischen Energienetzes eingesetzt werden, indem beispielsweise die im Abgabefall des mechanischen Speichers 4 im Elektromotor/Generator 6 erzeugte elektrische Energie in das Energienetz eingespeist wird. So kann die Netzfrequenz des elektrischen Energienetzes erhöht werden, um sie im Bereich der Sollfrequenz des entsprechenden Energienetzes zu halten. Durch den Einsatz der in dem mechanischen Speicher 4 gespeicherten Energie zur Netzstabilisierung kann so schnell auf die Netzfrequenz Einfluss genommen werden.

Im Speicherfall kann die elektrische Energie einerseits dazu genutzt werden, die potentielle Energie im mechanischen Speicher 4 durch Aufrollen des Seilzugs 5 und damit Anheben der Halterung 6 und der Redox-Flow-Batterien 3 zu erhöhen und andererseits kann die Energie chemisch im chemischen Speicher 3 gespeichert werden. Im Realfall ist ein großer Teil der gespeicherten Energie im chemischen Speicher 3 gespeichert und nur ein geringer Teil im mechanischen Speicher 4.

Redox-Flow-Batterien 2 können in einem ersten Betriebszustand betrieben werden, in dem sie Energie abgeben oder aufnehmen und in einem zweiten Betriebszustand, in dem sie keine Energie abgeben und keine Energie speichern. Zum Übergang vom zweiten Betriebszustand in den ersten Betriebszustand zur Abgabe oder Aufnahme von Energie ist es notwendig, eine Startenergie in die Redox-Flow-Batterie 2 einzubringen, die ausreichend ist, die Redox-Flow-Batterien 2 in einen betriebsbereiten Zustand zu versetzen. Dies umfasst z.B. das Anfahren der entsprechenden Pumpen und der entsprechenden Regelung und ggf. auch die Temperierung, wenn die Umgebungstemperatur der Redox-Flow-Batterien 2 ungünstig ist. Hier wird die potentielle Energie, die im mechanischen Speicher 4 gespeichert ist, zum Aufbringen dieser Startenergie genutzt, indem beispielsweise die im Abgabefalldes mechanischen Speichers 4 im Elektromotor/Generator 6 erzeugte elektrische Energie zum Antreiben der entsprechenden Pumpen genutzt wird. Seilzug 5, Elektromotor/Generator 6 und gegebenenfalls die Halterung 7 können gemeinsam als Hebevorrichtung 8 verstanden werden.

In einem einfachen Bespiel wird ein einzelnes Redox-Flow Batteriemodul - eine Redox-Flow-Batterie 2 - betrachtet. Dieser chemische Speicher 3 mit beispielsweise einem Gewicht von 2.700 kg [Kilogramm] erzeugt beim Absenken um 10 m [Meter] beispielsweise eine Energie von ca. 0.074 kWh [Kilowattstunden] durch die abgegebene potentielle Energie. Wenn der chemische Speicher 3 innerhalb von 30 s [Sekunden] über die genannten 10 m bewegt wird, wird eine Leistung von 8,8 kW [Kilowatt] erzeugt. Bei beispielsweise einem Startenergiebedarf von 500 W [Watt] kann der mechanische Speicher 4 in diesem Beispiel die die Startenergie für 9 Minuten bereitstellen, so dass das Speichersystem 1 Schwarzstartfähig ist.

Fig. 2 zeigt schematisch ein zweites Beispiel eines Speichersystems 1. Hier sollen nur die Unterschiede zum ersten Beispiel des Speichersystems 1 beschrieben werden, ansonsten wird auf die obige Beschreibung zum ersten Beispiel verwiesen. Hier umfasst der mechanische Speicher 4 eine hydraulische Hebevorrichtung 8, durch welche die Halterung 7 angehoben und abgesenkt werden kann. Die hydraulische Hebevorrichtung 8 umfasst zwei hydraulische Zylinder 9, die durch eine Erhöhung des Drucks eines Hydraulikmediums in dem jeweiligen Zylinder 9 ein Ausfahren von Kolben 10 der Zylinder 9 bewirkt, während eine Absenkung des Drucks im Zylinder 9 ein Einfahren des Kolbens 10 des Zylinders bewirkt, sodass die Halterung 7 mit den Redox-Flow-Batterien 2 angehoben und abgesenkt werden kann, wodurch sich die potentielle Energie im mechanischen Speicher 4 erhöht oder erniedrigt.

Der hydraulische Druck in den Zylindern 10 wird dabei durch eine Hydraulikpumpe 11 beeinflusst, durch die Hydraulikmedium in die Zylinder 10 gefördert werden kann. Die Hydraulikpumpe 11 wird im Falle der Speicherung von potentieller Energie, also dem Anheben der Halterung 7 durch die Hebevorrichtung 8, durch einen Elektromotor/Generator 6 angetrieben. Im Abgabefall, also beim Absenken der Halterung 7, treibt das rückströmende Hydraulikmedium die Hydraulikpumpe 11 und damit den Elektromotor/Generator 6 zur Erzeugung von elektrischer Energie an.

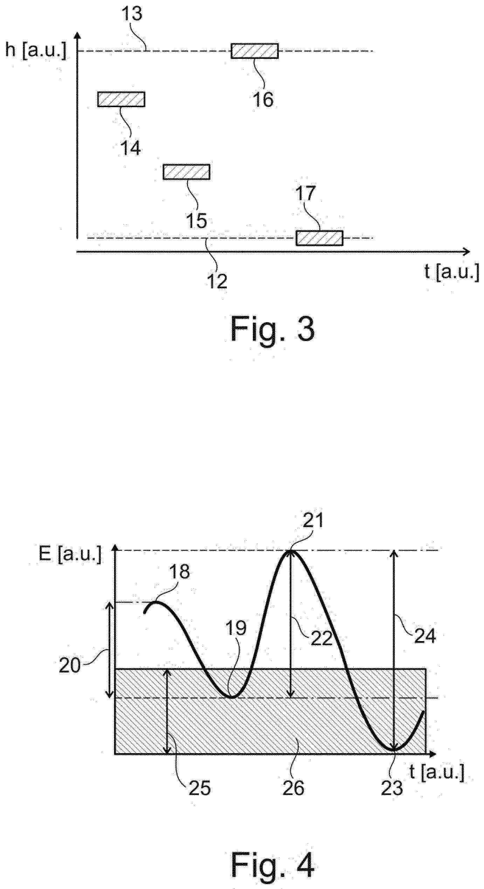

Fig. 3 zeigt ein erstes Beispiel einer Verfahrensführung mit unterschiedlichen Positionen h, hier Höhen h in willkürlichen Einheiten eines chemischen Speichers 3 gemäß dem oben beschriebenen ersten und zweiten Beispiel eines Speichersystems 1, Fig. 4 zeigt die entsprechend gespeicherte potentielle Energie E in willkürlichen Einheiten im mechanischen Speicher 4, jeweils gegen die Zeit t. Der mechanische Speicher 4 weist bauartbedingt eine minimale Höhe 12 und eine maximale Höhe 13 auf. Gezeigt werden Beispiele, bei denen die Halterung 7 zunächst eine erste Höhe 14 aufweist, dann unter Abgabe von Energie auf eine zweite Höhe 15 abgesenkt wird, dann auf eine dritte Höhe 16, die der maximalen Höhe 13 entspricht, unter Speicherung von Energie angehoben wird und dann in eine vierte Höhe 17, die der minimalen Höhe 12 entspricht, abgesenkt wird. Dies entspricht einem Energieverlauf wie in Fig. 4 angegeben. Der mechanische Speicher 4 weist also eine erste potentielle Energie 18 auf, wenn die Halterung 7 auf der ersten Höhe 14 ist, die sich auf eine zweite potentielle Energie 19 reduziert, wenn die Halterung 7 und damit der chemische Speicher 3 auf die zweite Höhe 15 abgesenkt wird. Hierdurch wird eine erste Energiedifferenz 20 freigegeben und kann entweder zum Schwarzstart des chemischen Speichers 4 oder zur Abgabe in das elektrische Energienetz genutzt werden. Beim Anheben der Halterung 7 auf die dritte Höhe 16 wird eine zweite Energiedifferenz 22 im mechanischen Speicher 4 gespeichert. Beim Absenken auf die vierte Höhe 17 wird die Energie im mechanischen Speicher 4 auf eine vierte potentielle Energie 23 abgesenkt und dabei eine dritte Energiedifferenz 24 freigegeben, die entweder als elektrische Energie in das elektrische Energienetz eingespeist werden kann oder die zum Schwarzstart des chemischen Speichers 3 genutzt werden kann. Weiterhin zeigt Fig. 4 eine Startenergie 25, die notwendig ist, um den chemischen Speicher 3 schwarz zu starten. Wird also die potentielle Energie E im mechanischen Speicher 4 in einen schraffiert gezeigten Bereich 26 geführt, so reicht die im mechanischen Speicher 4 gespeicherte Energie nicht mehr für den Schwarzstart des chemischen Speichers 3 aus.

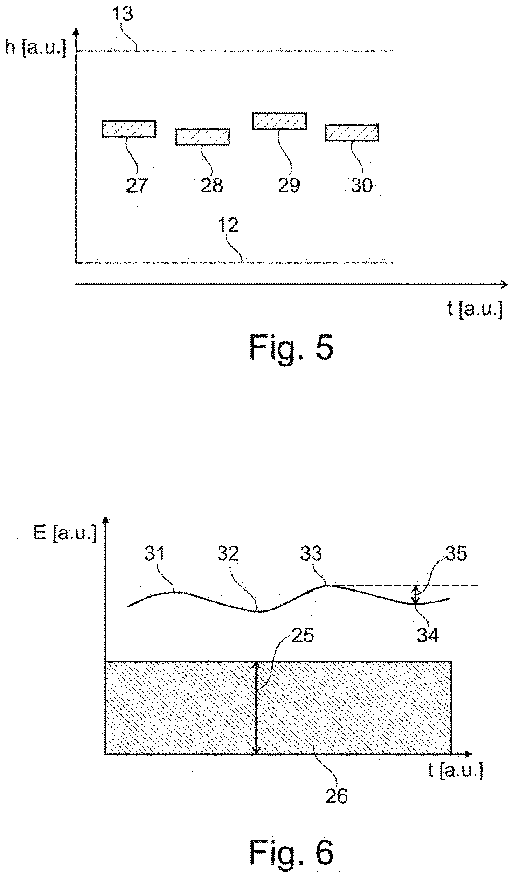

Fig. 5 und 6 zeigen analog ein zweites Beispiel der Verfahrensführung. Um Wiederholungen zu vermeiden, wird deshalb auf die Beschreibung zu Fig. 3 und 4 verwiesen, hier werden nur die Unterschiede erläutert. Im Unterschied zum ersten Beispiel sind die Höhenunterschiede zwischen einer fünften Höhe 27, einer sechsten Höhe 28, einer siebten Höhe 29 und einer achten Höhe 30 der Halterung 7 und damit des chemischen Speichers 3 kleiner, sodass die abgegebenen und aufgenommenen Energiedifferenzen kleiner sind. Fig. 6 zeigt erneut die entsprechende potentielle Energie E des mechanischen Speichers 4, wobei eine fünfte potentielle Energie 31 der fünften Höhe 27, eine sechste potentielle Energie 32 der sechsten Höhe 28, eine siebte potentielle Energie 33 der siebten Höhe 29 und eine achte potentielle Energie 34 der achten Höhe 30 der Halterung 7 und damit des chemischen Speichers 3 entspricht. Der Übersichtlichkeit halber ist nur eine beispielhafte Energiedifferenz 35 angegeben, die beim Absenken des chemischen Speichers von der siebten Höhe 29 auf die achte Höhe 30 freigesetzt wird.

Das zweite Beispiel zeigt den Einsatz des Verfahrens und des Speichersystems 1 zur Stabilisierung der Netzfrequenz eines angeschlossenen elektrischen Versorgungsnetzes. Hierbei werden immer wieder bei zu hoher Netzfrequenz kleinere Energiemengen im mechanischen Speicher 4 gespeichert, beispielsweise beim Anheben des chemischen Speichers 3 von der sechsten Höhe 28 auf die siebte Höhe 29 oder bei zu niedriger Netzfrequenz aus dem mechanischen Speicher 4 in das elektrische Energienetz abgegeben, beispielsweise beim Absenken des chemischen Speichers 4 von der siebten Höhe 29 auf die achte Höhe 30. Die Umsetzung der Energiedifferenz 34 erfolgt schnell sowohl im Speicher- als auch im Abgabefall, sodass das Speichersystem 1 zur Netzstabilisierung eingesetzt werden kann.

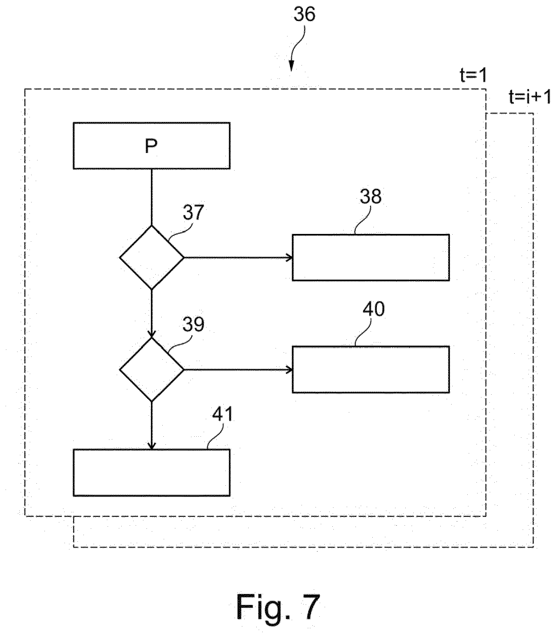

Fig. 7 zeigt einen Entscheidungsbaum 36 eines Beispiels einer Verfahrensführung zur Speicherung von elektrischer Energie im Speichersystem 1. Hierbei liegt zu einem Zeitpunkt i, also bei t=i, eine Leistungsanforderung P vor, die größer als null ist, das heißt, das Speichersystem 1 muss Energie E abgegeben. Hierbei wird zunächst in einer ersten Prüfung 37 geprüft, ob die im mechanischen Speicher 4 gespeicherte potentielle Energie E größer als die Startenergie 25 ist. Wenn dies nicht der Fall ist, erfolgte eine Leistungsabgabe 38 aus dem chemischen Speicher 3. Ist dies der Fall wird in einer zweiten Prüfung 39 geprüft, ob die Leistungsanforderung P kleiner als ein vorgegebener Leistungsgrenzwert ist. Ist dies nicht der Fall, ist also die Leistungsanforderung P größer als der vorgegebene Leistungsgrenzwert, erfolgt eine Leistungsabgabe 40 aus dem chemischen Speicher 3. Ist die Leistungsanforderung P kleiner als der Leistungsgrenzwert, so erfolgt eine Leistungsabgabe 41 aus dem mechanischen Speicher 4. Hierbei wird der Leistungsgrenzwert so gewählt, dass dann, wenn die Leistungsanforderung P kleiner als der Leistungsgrenzwert ist, von einer Netzstabilisierung ausgegangen werden kann und/oder die Leistungsanforderung P kleiner als ein vorgebbarer Effizienzgrenzwert ist, bei dessen Unterschreitung Energie nur sehr ineffizient aus dem chemischen Speicher 3 abgegeben werden kann, die rein aus dem mechanischen Speicher 4 bedient werden kann. Identische Entscheidungsbäume 36 werden auch zu Zeitpunkten i+1 und weiteren Zeitpunkten durchgeführt.

Das Speichersystem 1 und das entsprechende Verfahren zum Speichern und Abgeben von Energie vereinfachen die Nutzung von grundsätzlich nicht Schwarzstartfähigen chemischen Speichern 3 wie insbesondere Redox-Flow-Batterien 2 sowohl zum Einsatz zur Netzstabilisierung von elektrischen Energienetzen als auch als eigenkaltfähige Speichersysteme 1, da Energie, beispielsweise die zum Schwarzstart des chemischen Speichers 3 erforderliche Startenergie 25 oder eine kleinere Energiemenge zur Netzstabilisierung aus dem mechanischen Speicher 4 entnehmbar ist. Das bevorzugte Beispiel eines solchen mechanischen Speichers 4 umfasst eine Halterung 7 für den chemischen Speicher 3, dessen Höhe h zum Speichern von Energie erhöht und zum Abgeben von Energie abgesenkt wird. Durch eine entsprechende Kopplung mit einem Elektromotor/Generator 6, beispielsweise über einen Seilzug 5, kann so elektrische Energie erzeugt oder gespeichert werden.

### Bezugszeichenliste

- 1: Speichersystem
- 2: Redox-Flow-Batterie
- 3: chemischer Speicher
- 4: mechanischer Speicher
- 5: Seilzug
- 6: Elektromotor/Generator
- 7: Halterung
- 8: Hebevorrichtung
- 9: hydraulischer Zylinder
- 10: Kolben
- 11: Hydraulikpumpe
- 12: minimale Höhe
- 13: maximale Höhe
- 14: erste Höhe
- 15: zweite Höhe
- 16: dritte Höhe
- 17: vierte Höhe
- 18: erste potentielle Energie
- 19: zweite potentielle Energie
- 20: erste Energiedifferenz
- 21: dritte potentielle Energie
- 22: zweite Energiedifferenz
- 23: dritte potentielle Energie
- 24: dritte Energiedifferenz
- 25: Startenergie
- 26: schraffierter Bereich
- 27: fünfte Höhe
- 28: sechste Höhe
- 29: siebte Höhe
- 30: achte Höhe
- 31: fünfte potentielle Energie
- 32: sechste potentielle Energie
- 33: siebte potentielle Energie
- 34: achte potentielle Energie
- 35: Energiedifferenz
- 36: Entscheidungsbaum
- 37: erste Prüfung
- 38: Leistungsabgabe
- 39: zweite Prüfung
- 40: Leistungsabgabe
- 41: Leistungsabgabe

- E: potentielle Energie
- h: Höhe, Position
- i: Zeitpunkt
- i+1: Zeitpunkt
- P: Leistungsanforderung
- t: Zeit

## Patentansprüche

1. Verfahren zum Speichern und Abgeben von Energie, wobei elektrische Energie reversibel in einem Speichersystem (1) gespeichert wird, wobei ein erster Teil der elektrischen Energie als potentielle Energie und ein zweiter Teil in einem chemischen Speicher (3) des Speichersystems (1) chemisch gespeichert wird, **dadurch gekennzeichnet, dass** die Speicherung und Abgabe von potentieller Energie zumindest zeitweise durch eine Veränderung einer Position des chemischen Speichers (3) relativ zu einem Gravitationsfeld erfolgt, wobei der chemische Speicher relativ zum Gravitationsfeld zur Speicherung von Energie angehoben und zur Abgabe von Energie abgesenkt wird.

2. Verfahren nach Anspruch 1, bei dem das chemischen Speichersystem in einem ersten Betriebszustand, in dem es elektrische Energie abgibt oder aufnimmt und in einem zweiten Betriebszustand, in dem es keine elektrische Energie abgibt oder aufnimmt, betreibbar ist, wobei zum Übergang aus dem zweiten Betriebszustand in den ersten Betriebszustand eine Startenergie zum Aktivieren des chemischen Speichers (3) aufgebracht wird.

3. Verfahren nach Anspruch 2, bei dem die Startenergie durch die Umwandlung von potentieller Energie aufgebracht wird.

4. Verfahren nach einem der vorhergehenden Ansprüche, wobei die Speicherung und Abgabe der elektrischen Energie in eine Redox-Flow Batterie (2) als chemischer Speicher (3) erfolgt.

5. Speichersystem (1) zum Speichern und Abgeben von Energie, in dem elektrische Energie reversibel speicherbar ist, mit einem mechanischen Speicher (4) und einem chemischen Speicher (3), wobei ein erster Teil der elektrischen Energie als potentielle Energie in dem mechanischen Speicher (4) und ein zweiter Teil in dem chemischen Speicher (3) des Speichersystems (1) speicherbar ist, **dadurch gekennzeichnet, dass** durch den mechanischen Speicher zur Speicherung und Abgabe von potentieller Energie zumindest zeitweise die Position des chemischen Speichers (3) relativ zu einem Gravitationsfeld veränderbar ist, wobei der chemische Speicher relativ zum Gravitationsfeld zur Speicherung von Energie anhebbar und zur Abgabe von Energie absenkbar ist.

6. Speichersystem nach Anspruch 5, wobei das Speichersystem (1) in einem ersten Betriebszustand betreibbar ist, in dem es elektrische Energie abgibt oder aufnimmt und in einem zweiten Betriebszustand betreibbar ist, in dem es keine elektrische Energie abgibt oder aufnimmt, wobei zum Übergang aus dem zweiten Betriebszustand in den ersten Betriebszustand eine Startenergie zum Aktivieren des chemischen Speichersystems (3) nötig ist, die durch die Umwandlung von potentieller Energie aus dem mechanischen Speicher (4) in elektrische Energie aufbringbar ist.

7. Speichersystem nach einem der Ansprüche 5 bis 6, weiterhin umfassend mindestens eines der folgenden Elemente: einen Generator (6) und einen Elektromotor (6) zur Umwandlung von potentieller Energie in elektrische Energie.

8. Speichersystem nach einem der Ansprüche 5 bis 7, wobei der mechanische Speicher (4) eine Hebevorrichtung (8), insbesondere eine hydraulische Hebevorrichtung oder eine Hebevorrichtung umfassend einen Seilzug (5), zur Änderung der Lage des chemischen Speichers (4) aufweist.

9. Speichersystem nach einem der Ansprüche 5 bis 8, bei der der chemische Speicher (3) mindestens eines der folgenden Elemente umfasst: eine Redox-Flow Batterie, eine Lithium-Ionen Batterie, eine Natrium-Schwefel Batterie und eine Brennstoffzelle zur Wasserstoffrückverstromung.

## Claims

1. Method for storing and outputting energy, wherein electrical energy is reversibly stored in a storage system (1), wherein a first portion of the electrical energy is stored as potential energy and a second portion is stored chemically in a chemical storage (3) of the storage system (1), **characterized in that** the storing and outputting of potential energy is performed at least temporarily by changing a position of the chemical storage (3) relative to a gravitational field, wherein the chemical storage is raised relative to the gravitational field in order to store energy and is lowered relative to the gravitational field in order to output energy.

2. Method according to Claim 1, in which the chemical storage system can be operated in a first operating state in which it outputs or takes up electrical energy and in a second operating state in which it does not output or take up electrical energy, wherein starting energy for activating the chemical storage (3) is applied for the transition from the second operating state to the first operating state.

3. Method according to Claim 2, in which the starting energy is applied through the conversion of potential energy.

4. Method according to one of the preceding claims, wherein the storing and outputting of electrical energy is performed into a redox flow battery (2) as the chemical storage (3).

5. Storage system (1) for storing and outputting energy, in which electrical energy can be reversibly stored, having a mechanical storage (4) and a chemical storage (3), wherein a first portion of the electrical energy can be stored as potential energy in the mechanical storage (4) and a second portion can be stored in the chemical storage (3) of the storage system (1), **characterized in that** the position of the chemical storage (3) relative to a gravitational field can be changed at least temporarily by way of the mechanical storage for storing and outputting potential energy, wherein the chemical storage can be raised relative to the gravitational field in order to store energy and can be lowered relative to the gravitational field in order to output energy.

6. Storage system according to Claim 5, wherein the storage system (1) can be operated in a first operating state in which it outputs or takes up electrical energy and in a second operating state in which it does not output or take up electrical energy, wherein starting energy for activating the chemical storage system (3) is required for the transition from the second operating state to the first operating state, said starting energy being able to be applied through the conversion of potential energy from the mechanical storage (4) into electrical energy.

7. Storage system according to one of Claims 5 to 6, further comprising at least one of the following elements: a generator (6) and an electric motor (6) for converting potential energy into electrical energy.

8. Storage system according to one of Claims 5 to 7, wherein the mechanical storage (4) has a lifting device (8), in particular a hydraulic lifting device or a lifting device comprising a cable (5), for changing the position of the chemical storage (4).

9. Storage system according to one of Claims 5 to 8, in which the chemical storage (3) comprises at least one of the following elements: a redox flow battery, a lithium-ion battery, a sodium-sulphur battery, and a fuel cell for reconversion of hydrogen to electricity.

## Revendications

1. Procédé permettant d'accumuler et de distribuer de l'énergie, dans lequel de l'énergie électrique est accumulée de manière réversible dans un système d'accumulation (1), dans lequel une première partie de l'énergie électrique est accumulée sous forme d'énergie potentielle et une deuxième partie est accumulée chimiquement dans un accumulateur chimique (3) du système d'accumulation (1),
**caractérisé en ce que** l'accumulation et la distribution d'énergie potentielle ont lieu au moins temporairement par une modification d'une position de l'accumulateur chimique (3) par rapport à un champ gravitationnel, dans lequel l'accumulateur chimique est soulevé par rapport au champ gravitationnel pour accumuler de l'énergie et est abaissé pour distribuer de l'énergie.

2. Procédé selon la revendication 1, dans lequel le système d'accumulation chimique peut fonctionner dans un premier état de fonctionnement dans lequel il distribue ou absorbe de l'énergie électrique et dans un deuxième état de fonctionnement dans lequel il ne distribue ni n'absorbe aucune énergie électrique, dans lequel, pour le passage du deuxième état de fonctionnement au premier état de fonctionnement, une énergie de démarrage est produite pour activer l'accumulateur chimique (3).

3. Procédé selon la revendication 2, dans lequel l'énergie de démarrage est produite par la transformation de l'énergie potentielle.

4. Procédé selon l'une quelconque des revendications précédentes, dans lequel l'accumulation et la distribution de l'énergie électrique ont lieu dans une batterie à flux redox (2) en tant qu'accumulateur chimique (3).

5. Système d'accumulation (1) permettant d'accumuler et de distribuer de l'énergie, dans lequel de l'énergie électrique peut être accumulée de manière réversible, comprenant un accumulateur mécanique (4) et un accumulateur chimique (3), dans lequel une première partie de l'énergie électrique peut être accumulée sous forme d'énergie potentielle dans l'accumulateur mécanique (4) et une deuxième partie peut être accumulée dans l'accumulateur chimique (3) du système d'accumulation (1),
**caractérisé en ce que** pour l'accumulation et la distribution d'énergie potentielle, l'accumulateur mécanique peut modifier au moins temporairement la position de l'accumulateur chimique (3) par rapport à un champ gravitationnel, dans lequel l'accumulateur chimique peut être soulevé par rapport au champ gravitationnel pour accumuler de l'énergie et peut être abaissé pour distribuer de l'énergie.

6. Système d'accumulation selon la revendication 5, dans lequel le système d'accumulation (1) peut fonctionner dans un premier état de fonctionnement dans lequel il distribue ou absorbe de l'énergie électrique et dans un deuxième état de fonctionnement dans lequel il ne distribue ni n'absorbe aucune énergie électrique, dans lequel, pour le passage du deuxième état de fonctionnement au premier état de fonctionnement, une énergie de démarrage est nécessaire pour activer l'accumulateur chimique (3) qui peut être produite par la transformation d'énergie potentielle provenant de l'accumulateur mécanique (4) en énergie électrique.

7. Système d'accumulation selon l'une quelconque des revendications 5 à 6, comprenant en outre au moins l'un des éléments suivants : un générateur (6) et un moteur électrique (6) pour transformer de l'énergie potentielle en énergie électrique.

8. Système d'accumulation selon l'une quelconque des revendications 5 à 7, dans lequel l'accumulateur mécanique (4) présente un dispositif de levage (8), en particulier un dispositif de levage hydraulique ou un dispositif de levage comprenant un câble Bowden (5) pour modifier la position de l'accumulateur chimique (4) .

9. Système d'accumulation selon l'une quelconque des revendications 5 à 8, dans lequel l'accumulateur chimique (3) comprend au moins l'un des éléments suivants : une batterie à flux redox, une batterie lithium-ion, une batterie au sodium-soufre et une pile à combustible pour la reconversion de l'hydrogène en courant.
